Europäisches Patentamt

European Patent Office

Office européen des brevets

(19)

(11) Veröffentlichungsnummer : **0 002 209**
**B1**

(12) **EUROPÄISCHE PATENTSCHRIFT**

(45) Veröffentlichungstag der Patentschrift :
11.02.81

(51) Int. Cl.³ : **B 60 P   7/14, B 61 D 45/00**

(21) Anmeldenummer : **78101381.8**

(22) Anmeldetag : **16.11.78**

(54) **Vorrichtung zum Schutz des Ladegutes in Transporteinheiten, vorzugsweise Eisenbahngüterwagen.**

(30) Priorität : 25.11.77 DE 2752635

(43) Veröffentlichungstag der Anmeldung :
13.06.79 (Patentblatt 79/12)

(45) Bekanntmachung des Hinweises auf die Patenterteilung : 11.02.81 Patentblatt 81/06

(84) Benannte Vertragsstaaten :
**BE FR SE**

(56) Entgegenhaltungen :
**US - A - 3 550 538**
**US - A - 3 570 416**
**US - A - 3 877 393**

(73) Patentinhaber : **Waggon Union GmbH**

**D-5900 Siegen (DE)**

(72) Erfinder : **Kramer, Rolf, Dipl.-Ing.**
**Lohweg 2**
**D-5900 Siegen 21 (DE)**
Erfinder : **Hübsch, Henry, Dipl.-Ing.**
**Hans-Sachs-Weg 5**
**D-5900 Siegen 21 (DE)**
Erfinder : **Ahlborn, Günther**
**Holunderweg 26**
**D-5900 Siegen 21 (DE)**
Erfinder : **Keil, Klaus**
**Momstrasse 17**
**D-5241 Mudersbach (DE)**

(74) Vertreter : **Eberhard, Friedrich, Dr.**
**Am Thyssenhaus 1**
**D-4300 Essen (DE)**

Imprimerie Jouve, 17, rue du Louvre, 75001 Paris, France

Vorrichtung zum Schutz des Ladegutes in Transporteinheiten, vorzugsweise Eisenbahngüterwagen

Die Erfindung betrifft eine Vorrichtung zum Schutz des Ladegutes in Transporteinheiten, vorzugsweise Eisenbahngüterwagen, gegen in Längsrichtung auftretende Stöße, bestehend aus zwischen den Ladegutstapeln anzuordnenden Zwischenwänden, die über Laufrollen verfahrbar an Laufschienen der Längsobergurte des Wagenkastens aufgehängt und oben und unten mittels Raster beliebig festlegbar sind, wobei die an der Zwischenwand angeordneten Raster oben direkt oder über Rastschienen an den Längsobergurten und unten über Rastschienen an dem Boden des Wagenkastens angreifend angeordnet sind.

Stückgutstapel, die in Schienen- oder Straßenfahrzeugen festgelegt werden sollen, werden vorzugsweise auf Flachpaletten aufgeschichtet sein.

Die einfachsten, bekannten Vorrichtungen zum Festlegen dieser mit Gütern belegten Flachpaletten sind so gestaltet, daß unterschiedliche Ladehöhen und verbleibende Leerräume einzeln durch Abstützvorrichtungen oder Verstrebungen abgefangen oder auch Luftkissen in verbleibende Hohlräume eingesetzt werden. Es ist auch bekannt, Gurte mit eingewebten Gummiteilen quer durch die Fahrzeuge zu spannen und an besonderen Einrastschienen zu befestigen.

Durch die US-A-2 155 872 ist bekannt, obere und untere Schienen an den Wänden, dem Dach oder dem Boden des Fahrzeugs zu befestigen. Auf diesen Schienen können vertikale Führungen bewegt und festgelegt werden, in welche wiederum Querstreben einsetzbar sind, die das Ladegut starr festlegen.

Durch die US-A-2 585 778 ist bekannt, die Stapel durch Lattenroste zu trennen und gegen den Wagen mit Hilfe starrer Abschlußroste zu verspannen, die durch Heber gegeneinander verspannt werden und die gesamte Ladung starr gegen die Endwände halten. Nachteilig bei diesen Ausführungen ist die Vielzahl der losen Elemente, die zum Festlegen des Ladegutes erforderlich sind. Ein weiterer Nachteil dieser Ausführungen besteht darin, daß eine exakte Verspannung des Ladegutes nur dann erfolgen kann, wenn der Wagen voll beladen ist.

Durch die US-A-2 258 780 ist weiter bekannt, zwei Sätze von Behältern in einem Fahrzeug so zu halten, daß die äußeren Behälter an den Endwänden anliegen und beide Behältersätze von federnden Spreizmitteln getrennt und gegen die Endwände gedrückt werden. Hierzu ist die Anbringung spezieller Halterungen an den mittelsten Behältern oder Behälterrahmen notwendig, sowie das Einsetzen loser, federnder Spreizmittel, die in Folge dessen leicht verloren gehen können. Weiter ist bei dieser Ausführung nachteilig, daß diese beschriebene Art der Behälterfestlegung ebenfalls wieder einen voll beladenen Wagen oder die Anordnung von Leerbehältern erforderlich macht.

Durch die GB-A-675 027 ist die Anordnung aufgehängter Luftpolster zwischen Behältern und Behältergruppen bekannt. Diese Anordnung setzt ebenfalls einen voll beladenen Wagen bzw. die Anordnung von Leerpaletten zur Ausfüllung des Freiraumes voraus.

Es ist weiter durch die US-A-3 570 416 eine Vorrichtung zum Festlegen von Stückgutstapeln bekannt, bei der feste Zwischenwände mittels Rollen auf den im oberen Teil der Transporteinheit angeordneten Schienen im Wagen längsverschiebbar und mittels ein- und ausrückbarer Bolzen im Wagenboden und in den Obergurten festlegbar sind. Diese Trennwände unterteilen das Fahrzeug in einzelne Abteile, so daß der Wagen auch teilweise beladen werden kann.

Eine andere, durch die US-A-3 550 538 bekannte Zwischenwand ist zwischen je zwei oberen und unteren Zahnstangen angeordnet, in die Zahnräder der Wand zum Verfahren derselben mittels eines Zahnradgetriebes eingreifen. Zum Blockieren der Räder in den Zahnstangen sind Gestänge vorgesehen, die zwischen die Zähne der Räder greifen und von dort zentral durch eine Handhabe zurückziehbar sind. Die Zahnstangen mit ihren Rädern und zumindest die blockierenden Teile der Gestänge haben oben zueinander einen größeren Abstand als unten. Dieser Abstandsunterschied ist aber nur durch die einseitige Anordnung des Zahnradgetriebes bedingt.

Es sind weitere Vorrichtungen ähnlich der vorgenannten Art bekannt, bei denen teilweise zwischen den Zwischenwänden Druckwände oder Luftsäcke angeordnet sind, die das Ladegut gegen die Zwischenwände pressen. Nachteilig bei diesen Ausführungen ist die relativ teure Ausbildung der Luftsäcke bzw. Druckwände und die hierdurch erforderlichen Zusatzeinrichtungen um diese Luftsäcke zu befüllen.

Neuere Untersuchungen haben gezeigt, daß die Anordnung von verschiebbaren und festlegbaren Zwischenwänden die beste und wirtschaftlichste Möglichkeit ist, Ladegut bzw. Paletten so festzulegen, daß ein ausreichender Schutz gewährleistet ist.

Nachteilig bei den bisher bekannten Zwischenwänden ist dabei jedoch deren unwirtschaftliche und schwere Ausbildung. Da die bisher bekannten festlegbaren Zwischenwände oben an den Längsobergurten und unten etwa vertikal unter den Längsobergurten an den Außenlangträgern des Wagenbodens oder nahe diesen im Wagen festgelegt wurden, war die Ausbildung der Zwischenwand als beulsteifer Plattenträger erforderlich. Diese Ausbildung der Zwischenwand erfordert eine relative große Bauhöhe, die sich wiederum nachteilig auf den Laderaum und die Wirtschaftlichkeit des Systems auswirkt.

Die Aufgabe vorliegender Erfindung bestand nun darin, eine Zwischenwand einer Vorrichtung der eingangs genannten Art so auszubilden, daß die Bauhöhe der Zwischenwand möglichst niedrig gehalten werden kann, daß eine wirtschaftliche Ausbildung der Zwischenwand erzielbar ist und daß die Zwischenwand mit einfachen Mitteln festlegbar ist.

Diese Aufgabe der Erfindung wird dadurch gelöst, daß die unteren Raster zueinander mit kleinerem Abstand als die oberen Raster angeordnet und die jeweils übereinander angeordneten Raster durch einen in die Zwischenwand integrierten Träger biegesteif miteinander verbunden sind. Dadurch, daß die unteren Raster zueinander mit kleinerem Abstand als die oberen Raster angeordnet sind, kann oben im Bereich der Längsobergurte der Zwischenraum zwischen den Längsobergurten vorteilhaft zum Stapeln des Ladegutes freigehalten werden. Unten sind die Raster so weit zusammengerückt, daß die Verbindungslinie zwischen den übereinander angeordneten Rastern durch die Schwerlinien der Ladegutstapel bzw. Paletten verläuft. Hierdurch wird ermöglicht, daß der die übereinander angeordneten Raster verbindende Träger die auftretenden Stöße aufnimmt und in den Längsobergurt bzw. den Wagenboden ableitet. Die Zwischenwand kann somit auf vorteilhafte Weise wesentlich leichter und wirtschaftlicher hergestellt werden.

Die Raster sind wie an sich bekannt als längsverschieblich gelagerte Zapfen ausgebildet, wobei die übereinander angeordneten Zapfen über mindestens ein biegsames Zug-Druck- oder Zugelement mit mindestens einem Handgriff in Verbindung stehen und mittels dieses Handgriffs gegen die Kraft von Federn aus den wie ebenfalls für sich bekannt als Lochschiene ausgebildeten Rastschienen ausrückbar sind. Der Handgriff ist dabei in einem Ausschnitt der Trennwand angeordnet und von beiden Seiten der Trennwand aus betätigbar. Durch diese Ausbildung und Anordnung des Handgriffs ist eine einfache Bedienung bzw. Festlegung der Trennwand möglich.

Der Handgriff ist als Hebel an einer gelenkig in der Trennwand gelagerten Welle angeordnet, wobei an der Welle ein weitere Hebel angeordnet ist, an dem das Zug-Druck- oder Zugelement befestigt ist. An jeder Stirnseite der Trennwand ist weiter vorteilhaft gelenkig ein Hebel angeordnet, der über ein biegsames Zug-Druckelement mit dem Hebel der Welle in Verbindung steht. Auf diese Weise wird ermöglicht, einen Wagen mit mehreren Trennwänden und mehreren Ladegutstapeln erst voll zu beladen und dann anschließend die Trennwände festzulegen.

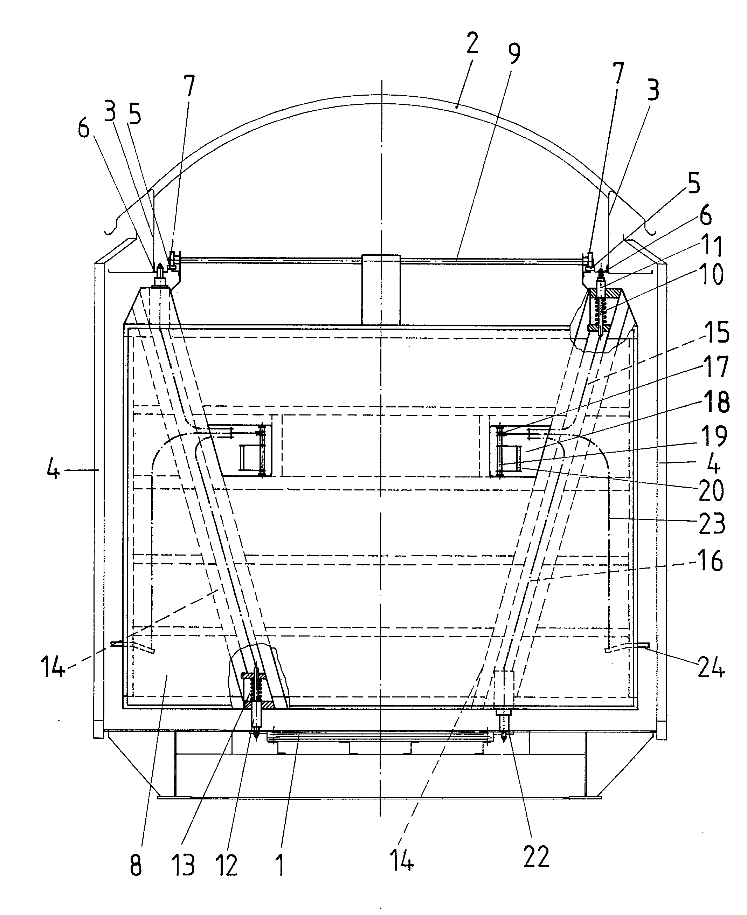

Einzelheiten der Erfindung sind in der Zeichnung anhand eines Ausführungsbeispieles erläutert.

Die Figur zeigt den Querschnitt durch einen schematisch dargestellten Eisenbahngüterwagen mit einer Vorrichtung gemäß der Erfindung.

Der in der Zeichnung dargestellte Eisenbahngüterwagen besteht im Bereich des Wagenkastens im wesentlichen aus dem Fußboden 1, dem Dach 2, den Längsobergurten 3 und den Seitenwänden 4. An den Längsobergurten 3 sind Laufschienen 5 und Rastschienen 6 angeordnet. Auf den Laufschienen 5 ist über Laufrollen 7 die Zwischenwand 8 der Vorrichtung längsverschiebblich gelagert. Die Laufrollen 7 der Zwischenwand 8 sind durch eine Welle 9 drehfest miteinander verbunden. Die Zwischenwand 8 ist in Sandwichbauweise als doppelwandiges Plattenbauteil ausgebildet. Oben sind nahe den Längsenden der Zwischenwand 8 vertikal und gegen den Druck einer Feder 10 längsverschieblich als Zapfen ausgebildete Raster 11 angeordnet. Die Raster 11 lagern dabei vertikal unter den Rastschienen 6 in der Zwischenwand 8. Unten an der Zwischenwand 8 sind ebenfalls Raster 12 angeordnet. Diese Raster 12 sind wie die Raster 11 als vertikal angeordnete Zapfen ausgebildet und gegen den Druck einer Feder 13 längsverschieblich gelagert. Die Raster 12 sind dabei gegenüber den Rastern 11 zur Wagenlängsmitte hin versetzt angeordnet. Der Abstand der Raster 12 zueinander ist dabei so gewählt, daß die Verbindungslinie der übereinander angeordneten Raster 11 und 12 durch die ermittelte mittlere Schwerlinie der zu verladenen Paletten verläuft. Die übereinander angeordneten Raster 11 und 12, bzw. deren Lagerung sind durch einen in die Zwischenwand 8 integrierten biegesteifen Träger 14 verbunden.

Jeder Raster 11 und 12 ist mit einem biegsamen Zug-Druck- oder Druckelement 15 und 16 verbunden. Die Zug-Druck- oder Druckelemente 15 und 16 der übereinander angeorndeten Raster 11 und 12 sind mit ihren freien Enden mit dem freien Ende eines Hebels 17 gelenkig verbunden, der an einer vertikal und drehbar in einem Ausschnitt 18 der Zwischenwand 8 gelagerten Welle 19 drehfest angeordnet ist. Die Welle 19 trägt weiter drehfest einen Handgriff 20, über den die Welle 19 verschwenkbar und die Raster 11 und 12 über die Zug-Druckelemente 15 und 16 und den Hebel 17 gegen den Druck der Federn 10 bzw. 13 aus den Rastschienen 6 des Längsobergurts 3 bzw. den Rastschienen 22 des Wagenbodens 1 ausrückbar sind. Der Handgriff 20 ist an der Welle 19 in dem Ausschnitt 18 so angeordnet, daß er von beiden Seiten der Zwischenwand 8 aus verschwenkbar ist.

An dem Hebel 17 der Welle 19 ist ein weiteres biegsames Zug-Druckelement 23 gelenkig angeordnet, daß mit seinem anderen Ende mit einem Hebel 24 gelenkig verbunden ist. Dieser Hebel 24 ist stirnseitig in der Zwischenwand 8 gelenkig gelagert und ragt mit seinem freien, als Handgriff ausgebildeten Ende vor die Stirnseite der Zwischenwand 8. Über diesen Hebel 24 sind die Raster 11 und 12 auch bei voll beladenem Wagen aus den Rastschienen 6 bzw. 22 ein- oder ausrückbar.

## Ansprüche

1. Vorrichtung zum Schutz des Ladegutes in Transporteinheiten, vorzugsweise Eisenbahngüterwagen gegen in Längsrichtung auftretende Stöße, bestehend aus zwischen den Ladegutstapeln anzuordnenden Zwischenwänden (8), die über Laufrollen (7) verfahrbar an Laufschienen (5) der Längsobergurte (3) des Wagenkastens aufgehängt und oben und unten mittels Raster (11 und 12) beliebig festlegbar sind, wobei die an der Zwischenwand angeordneten Raster (11 und 12) oben direkt oder über Rastschienen (6) an den Längsobergurten und unten über Rastschienen (22) an dem Boden (1) des Wagenkastens angreifend angeordnet sind, *dadurch gekennzeichnet*, daß die unteren Raster (12) zueinander mit kleinerem Abstand als die oberen Raster (11) angeordnet und die jeweils übereinander angeordneten Raster (11 und 12) durch einen in die Zwischenwand (8) integrierten Träger (14) biegesteif miteinander verbunden sind.

2. Vorrichtung nach Anspruch 1, *dadurch gekennzeichnet*, daß die Raster (11 und 12) wie an sich bekannt, als längsverschiebliche Zapfen ausgebildet sind und daß die übereinander angeordneten Raster (11 und 12) über mindestens ein biegsames Zug-Druck- oder Zugelement (15 und 16) mit mindestens einem Handgriff (20) in Verbindung stehen und mittels dieses Handgriff (20) gegen die Kraft von Federn (10 bzw. 13) aus den wie ebenfalls für sich bekannt als Lochschienen ausgebildeten Rasterschienen (6 und 22) ausrückbar sind.

3. Vorrichtung nach den Ansprüchen 1 und 2, *dadurch gekennzeichnet*, daß der Handgriff (20) in einem Ausschnitt (18) der Zwischenwand (8) angeordnet und von beiden Seiten der Zwischenwand (8) betätigbar sind.

4. Vorrichtung nach den Ansprüchen 1 bis 3, *dadurch gekennzeichnet*, daß der Handgriff (20) an einer gelenkig in der Zwischenwand (8) gelagerten Welle (19) angeordnet ist und daß an der Welle (19) ein weiterer Hebel (17) angeordnet ist, an dem das Zug-Druck- oder Zugelement (15 und 16) befestigt ist.

5. Vorrichtung nach den Ansprüchen 1 bis 4, *dadurch gekennzeichnet*, daß in jeder Stirnseite der Zwischenwand (8) gelenkig ein Hebel (24) angeordnet ist, der über ein biegsames Zug-Druckelement (23) mit dem Hebel (17) der Welle (19) in Verbindung steht.

## Claims

1. Device for the protection of cargo in transport units, preferably railway wagons, against shocks occurring in longitudinal direction, consisting of partition walls (8) to be positioned between the stacks of cargo, which are movable on rollers (7) and suspended from runner rails (5) of the longitudinal top girders (3) of the wagon body, and which can be locked at will at the top and bottom by index bolts (11 and 12) located on the partition wall, of which the top index bolts engage the longitudinal top girders either directly or through notched rails (6), and of which the bottom index bolts engage the floor (1) of the wagon body through notched rails (22), *characterized in that* the distance between the bottom index bolts (12) is smaller than the distance between the top index bolts (11), and that the respective index bolts (11 and 12) which are positioned above each other are connected by a girder (14) integrated in the partition wall (8) in such a manner that the arrangement is resisting to bending.

2. Device according to claim 1 *characterized in that* the index bolts (11 and 12), as generally known, are designed such that they are movable in longitudinal direction and that the index bolts (11 and 12) positioned above each other are connected by at least one flexible pull and push element or pull element (15 and 16) to at least one handle (20), and can be disengaged by this handle (20) from the notched rails (6 and 22) which, as such, are also generally known, against the force of springs (10, 13 respectively).

3. Device according to claims 1 and 2 *characterized in that* the handle (20) is positioned to an aperture (18) of the partition wall (8) and operable from either side of the partition wall (8).

4. Device according to claims 1 to 3 *characterized in that* the handle (20) is located on an articulated shaft (19) positioned in the partition wall (8) and that another lever (17) to which the pull and push element or pull element (15 and 16) is fastened, is positioned on the shaft (19).

5. Device according to claims 1 to 4 *characterized in that* in each face of the partition wall (8) an articulated lever (24) is positioned which is connected to the lever (17) of the shaft (19) by a flexible pull and push element (23).

## Revendications

1. Dispositif de protection des marchandises chargées dans des unités de transport, de préférence dans des wagons de marchandises, contre des chocs longitudinaux, comprenant des cloisons mobiles (8) disposées entre les piles de marchandises, qui sont suspendues par des roulettes (7) à des rails de roulement (5) des membrures supérieures longitudinales (3) de la caisse de wagons et peuvent être fixées à volonté en haut et en bas au moyen de verrous (11 et 12), les verrous (11) placés en haut de la cloison attaquant les membrures supérieures longitudinales directement ou par l'intermédiaire de rails à crans (6), et les verrous (12) placés en bas attaquant le plancher (1) de la caisse des wagons par l'intermédiaire de rails à crans (22), caractérisé par le fait que les verrous inférieurs (12) sont moins écartés que les verrous supérieurs (11), et que les verrous placés l'un au-dessus de l'autre (11 et 12) sont réunis par une poutre (14) rigide à la flexion intégrée à la cloison (8).

2. Dispositif selon la revendication 1, caractérisé par le fait que les verrous (11 et 12), de façon connue, sont des tenons mobiles longitudinalement et que les verrous (11 et 12) placés l'un au-dessus de l'autre sont reliés à au moins une poignée (20) par au moins un élément flexible de traction-compression ou de traction (15 et 16) et peuvent, au moyen de cette poignée (20), être dégagés, contre l'action de ressorts (10 et 13), des rails à crans (6 et 22) qui, de façon également connue, sont des rails perforés.

3. Dispositif selon la revendication 2, caractérisé par le fait que la poignée (20) est placée dans un évidement (18) de la cloison (8) et peut être manœuvrée depuis les deux côtés de celle-ci.

4. Dispositif selon l'une des revendications 2 et 3, caractérisé par le fait que la poignée (20) est placée sur un arbre (19) monté de façon articulée dans la cloison (8) et que sur cet arbre (19) est placé un levier (17) auquel est fixé l'élément de traction-compression ou de traction (15 et 16).

5. Dispositif selon la revendication 4, caractérisé par le fait que sur chaque bord latéral de la cloison (8) est monté de façon articulée un levier (24) qui est relié au levier (17) de l'arbre (19) par un élément flexible de traction-compression (23).

0 002 209

1